# EUROPEAN PATENT APPLICATION

(11) **EP 4 539 520 A1**
(43) Date of publication of application: **16.04.2025**
(21) Application number: 23829910.1
(22) Date of filing: 09.06.2023
(51) Int. Cl.: H04W 8/24

(54) **TERMINAL ACCESS METHOD AND DEVICE**

(30) Priority: 30.06.2022 CN 202210761559
(71) Applicant: Huawei Technologies Co., Ltd., Shenzhen, Guangdong 518129 (CN)
(72) Inventor: HUANG, Kang, Shenzhen, Guangdong 518129 (CN); ZHU, Hualin, Shenzhen, Guangdong 518129 (CN); XU, Yishan, Shenzhen, Guangdong 518129 (CN); LI, Hantao, Shenzhen, Guangdong 518129 (CN)
(74) Representative: Isarpatent
(86) International application number: PCT/CN2023/099473
(87) International publication number: WO 2024/001726

(57) **Abstract**

This application provides a terminal access method and an apparatus, and relates to the field of communication technologies, to simplify an interaction procedure in which a terminal with an electronic tag accesses a core network, and improve access efficiency of the terminal based on different access procedures corresponding to different types of electronic tags. The method includes: A first network element receives a first message from an access network device, where the first message includes identification information of a terminal; identifies a terminal type; and if the terminal type is a first terminal type, sends the identification information of the terminal to an application server; or if the terminal type is a second terminal type, triggers an authentication procedure of the terminal.

## Description

This application claims priority to Chinese Patent Application No. 202210761559.0, filed with the China National Intellectual Property Administration on June 30, 2022 and entitled "TERMINAL ACCESS METHOD AND APPARATUS", which is incorporated herein by reference in its entirety.

### TECHNICAL FIELD

This application relates to the field of communication technologies, and in particular, to a terminal access method and an apparatus.

### BACKGROUND

The internet of things (Internet of Things, IoT) is to connect an object to a network through an information sensing device according to an agreed protocol, so that an electronic tag on the object can perform information exchange and communication through an information propagation medium, thereby implementing functions such as intelligent identification, positioning, tracking, or supervision on the object. The passive or semi-passive internet of things (Passive IoT, P-IoT) means that some network nodes in the internet of things may be passive or semi-passive. To be specific, these nodes are not equipped with or do not rely mainly on power supply devices such as batteries, but obtain electric energy from an environment to support data perception, transmission, and calculation. For example, a passive or semi-passive internet of things architecture may include nodes such as a passive or semi-passive electronic tag, a reader, and a server. The reader may identify the passive or semi-passive electronic tag in a wireless radio frequency manner, and then the reader may send identified information to the server.

Currently, when accessing a 3rd generation partnership project (3rd generation partnership project, 3GPP) network, a terminal device performs a series of interactions such as a registration procedure and an authentication procedure with a plurality of 3GPP network elements. However, for the passive or semi-passive electronic tag, a complex network access procedure increases a network access delay of the electronic tag, reducing inventory efficiency of the internet of things. In addition, a unified network access procedure cannot satisfy differentiated requirements of the internet of things for the passive electronic tag and the semi-passive electronic tag for aspects such as a delay, identification efficiency, and information security.

### SUMMARY

This application provides a terminal access method and an apparatus, to resolve a problem in a conventional technology that an interaction procedure in which a passive or semi-passive electronic tag accesses a 3GPP network is complex, and differentiated requirements of different electronic tags cannot be satisfied.

To achieve the foregoing objective, the following technical solutions are used in this application.

According to a first aspect, a terminal access method is provided, and is applied to a first network element. The method includes: receiving a first message from an access network device, where the first message includes identification information of a terminal; identifying a terminal type; and if the terminal type is a first terminal type, sending the identification information of the terminal to an application server; or if the terminal type is a second terminal type, triggering an authentication procedure of the terminal.

In a possible implementation, the identifying a terminal type specifically includes: identifying the terminal type based on the first message, where the identification information of the terminal indicates the terminal type; or the first message indicates the terminal type; or the first message includes first indication information, and the first indication information indicates the terminal type.

In a possible implementation, if the identification information of the terminal indicates the terminal type, the identifying the terminal type based on the first message specifically includes: determining, based on the identification information of the terminal according to a terminal type matching rule, that the terminal type is the first terminal type or the second terminal type, where the terminal type matching rule indicates a correspondence between the identification information of the terminal and the terminal type.

In a possible implementation, the first network element is configured with the terminal type matching rule, or the first network element obtains the terminal type matching rule from the application server.

In a possible implementation, before the receiving a first message from an access network device, the method further includes: receiving a second message from the application server, where the second message indicates a target terminal type, where the second message includes second indication information, and the **second indication information indicates** the target terminal type; or the second message indicates the target terminal type, and the target terminal type includes the first terminal type or the second terminal type.

In a possible implementation, after the receiving a second message from the application server, the method further includes: sending a third message to the access network device based on the second message, where the third message indicates the target terminal type, where the third message includes third indication information, and the third indication information indicates the target terminal type; or the third message indicates the target terminal type.

In a possible implementation, the method further includes: determining a transmission priority of the terminal based on the terminal type.

In a possible implementation, a transmission priority of the first terminal type is higher than a transmission priority of the second terminal type.

In a possible implementation, the first network element is an access and mobility management function network element or a tag management function network element.

In a possible implementation, the first terminal type is a passive electronic tag, and the second terminal type is a semi-passive electronic tag.

According to a second aspect, a terminal access method is provided, and is applied to a terminal. The method includes: establishing a connection to an access network device; and sending a first message to a first network element through the access network device, where the first message includes identification information of the terminal, and the first message indicates a terminal type.

In a possible implementation, that the first message indicates a terminal type specifically includes: the identification information of the terminal indicates the terminal type; or a type of the first message indicates the terminal type; or the first message includes first indication information, and the first indication information indicates the terminal type.

In a possible implementation, if the terminal type is a second terminal type, the method further includes: receiving an authentication request from the first network element; completing authentication with an authentication, authorization, and accounting server; and sending an authentication response to the first network element.

In a possible implementation, the establishing a connection to an access network device specifically includes: receiving a fourth message from the access network device, where the fourth message indicates a target terminal type, and the target terminal type includes a first terminal type or the second terminal type; if the terminal matches the target terminal type, sending a fifth message to the access network device, where the fifth message is used to request to access the access network device; and receiving a sixth message from the access network device, where the sixth message is used to respond to the fifth message.

In a possible implementation, the first network element is an access and mobility management function network element, the first terminal type is a passive electronic tag, and the second terminal type is a semi-passive electronic tag.

According to a third aspect, a terminal access method is provided, and is applied to an access network device. The method includes: receiving a third message from a first network element, where the third message indicates a target terminal type, and the target terminal type includes a first terminal type or a second terminal type; establishing a connection to a terminal that matches the target terminal type; and forwarding a first message from the terminal to the first network element, where the first message includes identification information of the terminal.

In a possible implementation, the third message indicates the target terminal type, where the third message includes third indication information, and the third indication information indicates the target terminal type; or the third message indicates the target terminal type.

In a possible implementation, the establishing a connection to a terminal that matches the target terminal type specifically includes: sending a fourth message based on the third message, where the fourth message indicates the target terminal type; receiving a fifth message from the terminal, where the fifth message is used to request to access the access network device, and a terminal type is the target terminal type; and sending a sixth message to the terminal, where the sixth message is used to respond to the fifth message.

In a possible implementation, the first network element is an access and mobility management function network element, the first terminal type is a passive electronic tag, and the second terminal type is a semi-passive electronic tag.

According to a fourth aspect, an electronic tag access method is provided, and is applied to an application server. The method includes: sending a second message to a first network element, where the second message indicates a target terminal type; or the second message indicates a terminal type matching rule, the target terminal type includes a first terminal type or a second terminal type, and the terminal type matching rule indicates a correspondence between identification information of a terminal and a terminal type; and receiving the identification information from the terminal.

In a possible implementation, the second message includes second indication information, and the **second indication information indicates** the target terminal type; or the second message indicates the target terminal type.

In a possible implementation, the first network element is an access and mobility management function network element, the first terminal type is a passive electronic tag, and the second terminal type is a semi-passive electronic tag.

According to a fifth aspect, a communication apparatus is provided. The apparatus includes: a transceiver module, configured to receive a first message from an access network device, where the first message includes identification information of a terminal; and a processing module, configured to: identify a terminal type; and if the terminal type is a first terminal type, send the identification information of the terminal to an application server; or if the terminal type is a second terminal type, trigger an authentication procedure of the terminal.

In a possible implementation, the processing module is specifically configured to identify the terminal type based on the first message, where the identification information of the terminal indicates the terminal type; or the first message indicates the terminal type; or the first message includes first indication information, and the first indication information indicates the terminal type.

In a possible implementation, if the identification information of the terminal indicates the terminal type, the processing module is specifically configured to determine, based on the identification information of the terminal according to a terminal type matching rule, that the terminal type is the first terminal type or the second terminal type, where the terminal type matching rule indicates a correspondence between the identification information of the terminal and the terminal type.

In a possible implementation, the apparatus is configured with the terminal type matching rule, or obtains the terminal type matching rule from the application server.

In a possible implementation, the transceiver module is further configured to receive a second message from the application server, where the second message indicates a target terminal type, where the second message includes second indication information, and the second indication information indicates the target terminal type; or the second message indicates the target terminal type, and the target terminal type includes the first terminal type or the second terminal type.

In a possible implementation, the transceiver module is further configured to send a third message to the access network device based on the second message, where the third message indicates the target terminal type, where the third message includes third indication information, and the third indication information indicates the target terminal type; or the third message indicates the target terminal type.

According to a sixth aspect, a communication apparatus is provided. The apparatus includes: a processing module, configured to establish a connection to an access network device; and a transceiver module, configured to send a first message to a first network element through the access network device, where the first message includes identification information of a terminal, and the first message indicates a terminal type.

In a possible implementation, the identification information of the terminal indicates the terminal type; or a type of the first message indicates the terminal type; or the first message includes first indication information, and the first indication information indicates the terminal type.

In a possible implementation, if the terminal type is a second terminal type, the transceiver module is further configured to receive an authentication request from the first network element. The processing module is further configured to complete authentication with an authentication, authorization, and accounting server. The transceiver module is further configured to send an authentication response to the first network element.

In a possible implementation, the transceiver module is specifically configured to: receive a fourth message from the access network device, where the fourth message indicates a target terminal type, and the target terminal type includes a first terminal type or the second terminal type; if the terminal matches the target terminal type, send a fifth message to the access network device, where the fifth message is used to request to access the access network device; and receive a sixth message from the access network device, where the sixth message is used to respond to the fifth message.

According to a seventh aspect, a communication apparatus is provided. The apparatus includes: a transceiver module, configured to receive a third message from a first network element, where the third message indicates a target terminal type, and the target terminal type includes a first terminal type or a second terminal type; and a processing module, configured to establish a connection to a terminal that matches the target terminal type, where the transceiver module is further configured to forward a first message from the terminal to the first network element, where the first message includes identification information of the terminal.

In a possible implementation, the third message indicates the target terminal type, where the third message includes third indication information, and the third indication information indicates the target terminal type; or the third message indicates the target terminal type.

In a possible implementation, the transceiver module is specifically configured to: send a fourth message based on the third message, where the fourth message indicates the target terminal type; receive a fifth message from the terminal, where the fifth message is used to request to access the access network device, and a terminal type is the target terminal type; and send a sixth message to the terminal, where the sixth message is used to respond to the fifth message.

According to an eighth aspect, a communication apparatus is provided. The apparatus includes: a transceiver module, configured to send a second message to a first network element, where the second message indicates a target terminal type; or the second message indicates a terminal type matching rule, the target terminal type includes a first terminal type or a second terminal type, and the terminal type matching rule indicates a correspondence between identification information of a terminal and a terminal type, where the transceiver module is further configured to receive the identification information from the terminal.

In a possible implementation, the second message includes second indication information, and the second indication information indicates the target terminal type; or the second message indicates the target terminal type.

According to a ninth aspect, a communication apparatus is provided. The communication apparatus includes a processor and a communication interface. The communication interface is configured to communicate with a module outside the communication apparatus, and the processor is configured to run a computer program or instructions, to implement the method according to any one of the first aspect.

According to a tenth aspect, a communication apparatus is provided. The communication apparatus includes a processor and a communication interface. The communication interface is configured to communicate with a module outside the communication apparatus, and the processor is configured to run a computer program or instructions, to implement the method according to any one of the second aspect.

According to an eleventh aspect, a communication apparatus is provided. The communication apparatus includes a processor and a communication interface. The communication interface is configured to communicate with a module outside the communication apparatus, and the processor is configured to run a computer program or instructions, to implement the method according to any one of the third aspect.

According to a twelfth aspect, a communication apparatus is provided. The communication apparatus includes a processor and a communication interface. The communication interface is configured to communicate with a module outside the communication apparatus, and the processor is configured to run a computer program or instructions, to implement the method according to any one of the fourth aspect.

According to a thirteenth aspect, a computer-readable storage medium is provided. The computer-readable storage medium includes a computer program; and when the computer program is run on a computer, the computer is enabled to perform the method according to any one of the first aspect.

According to a fourteenth aspect, a computer-readable storage medium is provided. The computer-readable storage medium includes a computer program; and when the computer program is run on a computer, the computer is enabled to perform the method according to any one of the second aspect.

According to a fifteenth aspect, a computer-readable storage medium is provided. The computer-readable storage medium includes a computer program; and when the computer program is run on a computer, the computer is enabled to perform the method according to any one of the third aspect.

According to a sixteenth aspect, a computer-readable storage medium is provided. The computer-readable storage medium includes a computer program; and when the computer program is run on a computer, the computer is enabled to perform the method according to any one of the fourth aspect.

According to a seventeenth aspect, a computer program product is provided. When the computer program product runs on a computer or a processor, the computer or the processor is enabled to perform the method according to any one of the first aspect.

According to an eighteenth aspect, a computer program product is provided. When the computer program product runs on a computer or a processor, the computer or the processor is enabled to perform the method according to any one of the second aspect.

According to a nineteenth aspect, a computer program product is provided. When the computer program product runs on a computer or a processor, the computer or the processor is enabled to perform the method according to any one of the third aspect.

According to a twentieth aspect, a computer program product is provided. When the computer program product runs on a computer or a processor, the computer or the processor is enabled to perform the method according to any one of the fourth aspect.

According to a twenty-first aspect, a communication system is provided. The communication system includes the communication apparatus according to any one of the fifth aspect, the communication apparatus according to any one of the sixth aspect, the communication apparatus according to any one of the seventh aspect, and the communication apparatus according to any one of the eighth aspect.

It may be understood that the communication method, the communication apparatus, the communication system, the computer-readable storage medium, the computer program product, or the like provided above may be implemented by using the corresponding method provided above. Therefore, for beneficial effects that can be achieved by the communication method, the communication apparatus, the communication system, the computer-readable storage medium, the computer program product, or the like, refer to the beneficial effects in the corresponding method provided above. Details are not described herein again.

### BRIEF DESCRIPTION OF DRAWINGS

FIG. 1 is a diagram of a system architecture of an internet of things according to an embodiment of this application;
FIG. 2 is a diagram of an inventory procedure of an electronic tag according to an embodiment of this application;
FIG. 3 is a schematic flowchart of establishing a connection between a reader and a terminal according to an embodiment of this application;
FIG. 4 is a diagram of a network access procedure in which a terminal accesses a core network according to an embodiment of this application;
FIG. 5 is diagram of a network architecture of a communication system according to an embodiment of this application;
FIG. 6 is a diagram of a structure of a communication apparatus according to an embodiment of this application;
FIG. 7 is a schematic flowchart of a terminal access method according to an embodiment of this application;
FIG. 8 is a schematic flowchart of another terminal access method according to an embodiment of this application;
FIG. 9 is a schematic flowchart of another terminal access method according to an embodiment of this application;
FIG. 10A and FIG. 10B are a schematic flowchart of another terminal access method according to an embodiment of this application; and
FIG. 11 is a diagram of a structure of a communication apparatus according to an embodiment of this application.

### DESCRIPTION OF EMBODIMENTS

The terms "first" and "second" mentioned below are merely intended for a purpose of description, and shall not be construed as an indication or implication of relative importance or implicit indication of a quantity of indicated technical features. Therefore, a feature limited by "first" or "second" may explicitly or implicitly include one or more features. In descriptions of embodiments, unless otherwise specified, "a plurality of" means two or more.

It should be noted that, in this application, the word such as "example" or "for example" is used to represent giving an example, an illustration, or a description. Any embodiment or design solution described as an "example" or "for example" in this application should not be explained as being more preferred or having more advantages than another embodiment or design solution. Exactly, use of the word such as "example" or "for example" is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, technologies in this application are briefly described.

Internet of things (Internet of Things, IoT): The internet of things may also be referred to as an internet of everything, and refers to a process of collecting a target object in real time by using various information sensors, radio frequency identification technologies, global positioning technologies, or the like. For example, the internet of things may obtain required information such as sound, light, heat, electricity, mechanics, or location related to the target object, and implements ubiquitous connections between things and between things and people through various possible network access, and implements intelligent perception, identification, and management of the target object.

Electronic tag: The electronic tag is also referred to as a radio frequency identification (Radio Frequency Identification, RFID) tag, a radio frequency tag, a transponder, or the like. Specifically, the electronic tag may include a coupling element and a chip. Each electronic tag has a unique identifier ID or electronic code, and is attached to or integrated into an object to identify a target object. Based on a non-contact automatic identification technology, a reader may automatically identify the electronic tag included in the target object by using a radio frequency signal and obtain related data of the electronic tag, to achieve an objective of identifying the target object.

The electronic tag may be classified into an active electronic tag, a passive electronic tag, and a semi-passive electronic tag depending on whether there is a power supply module (such as a battery) inside the electronic tag. A source may be a power supply.

The active electronic tag refers to that the electronic tag has an internal power supply module, which can detect a signal of a reader and actively transmit the signal at any time, to send information stored in an electronic tag chip to the reader. The semi-passive electronic tag is between the active electronic tag and the passive electronic tag. Embodiments of this application focus on an access method for accessing a core network by using two types of electronic tags: the passive electronic tag and the semi-passive electronic tag.

Passive electronic tag: The passive electronic tag does not have an internal power supply module, and does not need additional energy supply. The electronic tag may obtain energy by capturing a radio wave sent by a reader through an antenna, and then send information stored in an electronic tag chip. The reader receives the information sent by the passive electronic tag, to complete identification of the passive electronic tag. When the reader can continuously transmit radio frequency waves, a passive electronic tag within signal coverage of the reader can be identified.

Semi-passive electronic tag: The semi-passive electronic tag may also be referred to as a semi-active electronic tag, which means that although the electronic tag has an internal power supply module, the power supply module may continuously obtain energy from an environment in a manner such as solar energy and store the energy locally, for example, store the energy in a local capacitor. In other words, the semi-passive electronic tag can continuously obtain energy from the ambient environment, and does not need to periodically replace a battery or charge the power supply module. In a normal case, the semi-passive electronic tag is in a sleep state, does not work, and does not send a radio frequency signal to the outside, which is equivalent to a passive electronic tag and does not need to consume battery energy. When the semi-passive electronic tag enters a signal range of the reader, the electronic tag is activated and enters an operating state only after receiving excitation of the radio frequency signal sent by the reader. Compared with the passive electronic tag, the semi-passive electronic tag has wider coverage and higher power consumption under a same reader signal. In addition, the semi-passive tag supports more tag capabilities, such as long-distance read and write functions.

In an implementation, some semi-passive electronic tags may store some electric energy in a manner such as solar energy, so that the semi-passive electronic tags may actively send a signal of a frequency, so that the reader receives the signal, decodes the signal to obtain information of the semi-passive electronic tags, and performs related data processing.

An electronic tag technology may be widely applied to various fields, for example, applied to logistics or warehousing. An electronic tag corresponding to an object may be identified to quickly identify the object, and information about the identified object may be further managed. Therefore, in the field of logistics or warehousing, the identification of electronic tags may be referred to as inventory, which is not described in the following.

For example, a passive electronic tag or a semi-passive electronic tag may be embedded into or attached to goods, and the goods are stored in a warehouse, a shopping mall, or the like. In a logistics process of the goods, information about the electronic tag is automatically collected through a reader, so that an administrator can query related information of the goods in a goods inventory system, to reduce a risk of goods being lost or stolen, and further improve a goods handover speed. Compared with manual inventory, this technology can effectively improve inventory accuracy and inventory efficiency, and prevent unauthorized sales, and achieve anti-counterfeiting.

In addition, the technology may be further applied to fields such as asset management or industrial manufacturing. For example, management of a large quantity of assets or valuables such as a library, an art museum, and a museum should have a complete management procedure or a strict protection measure. When storage information of a book or a valuable changes abnormally, a preset reminding mechanism may be used to remind an administrator to handle a related situation.

For example, the following Table 1 lists a comparison between some passive electronic tags and semi-passive electronic tags. It can be seen that the passive electronic tags have lower power consumption and lower costs, and data transmitted by the passive electronic tags is only identification information ID of the tags. Therefore, a security requirement is lower. Generally, a quantity of passive electronic tags is larger, and therefore, a requirement for identification or determining efficiency is higher.

**Table 1: Comparison between a passive electronic tag and a semi-passive electronic tag**

| | Passive electronic tag | Semi-passive electronic tag |
|---|---|---|
| Power consumption | Lower (about 1 uW) | Higher (about 100 uW) |
| Costs | Lower | Higher |
| Identification efficiency | Higher requirement, about 100 times per second | Lower requirement, greater than one time per second |
| Transmission data | Tag identifier ID | Tag identifier ID and data (sensor data or data in a tag storage area) |
| Information security requirement | Lower | Higher |
| Application scenarios | Logistics, warehousing, and asset management | Industrial manufacturing and sensor data |

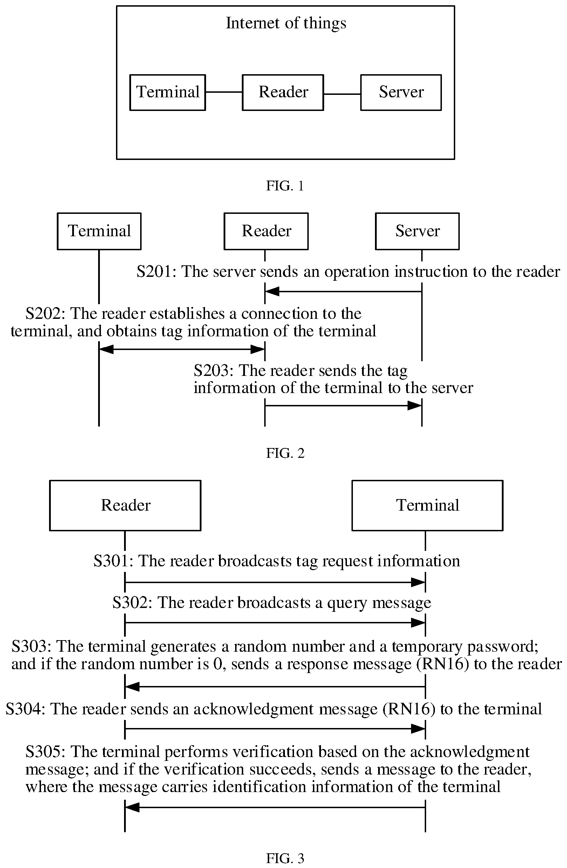

As shown in FIG. 1, a network architecture of a passive or semi-passive internet of things may include at least one terminal, at least one reader, and at least one server.

The terminal in embodiments of this application mainly refers to an IoT terminal, in other words, a terminal device that can perform identification and interaction with the reader by using a radio frequency technology. The device includes a passive electronic tag or a semi-passive electronic tag, or the device integrates a passive electronic tag or a semi-passive electronic tag.

The reader (Reader) may implement non-contact bidirectional data communication with the electronic tag of the terminal by using a radio frequency technology, and read and write an electronic tag or a radio frequency card (Tag) by using a radio frequency signal, to achieve an objective of identifying a target terminal and performing data exchange.

The server may be specifically an application server (Application Server, AS), configured to implement service logic generation and management functions of some specific applications or services. The server may also be an application layer function (Application Function, AF) network element, configured to implement various services of an application layer, for example, may be an internal application of an operator, or may be a third-party AF, such as a video server or a game server. In embodiments of this application, the server mainly refers to a server that may be configured to implement electronic tag management. The server may deliver an inventory instruction to the reader, to indicate the reader to identify/inventory an electronic tag that satisfies a specific requirement.

FIG. 2 shows a procedure of identifying a passive electronic tag or a semi-passive electronic tag, or the procedure may be referred to as an inventory procedure. As shown in FIG. 2, the procedure may include the following steps.

S201: A server sends an operation instruction to a reader.

It should be noted that, in this embodiment of this application, the operation instruction delivered by the reader to an electronic tag generally includes an access operation, a read/write operation, or a write operation. The access operation is used to obtain identification information of the electronic tag. In the field of internet of things technologies, a procedure of accessing the electronic tag may also be referred to as an inventory procedure. The read operation is used to obtain data information in a storage area or a user area of the electronic tag. The write operation is used to write some information into the storage area of the electronic tag. In the field of internet of things technologies, a procedure of reading or writing the electronic tag may also be referred to as an inventory procedure. For the inventory procedure, tag inventory/access is usually performed first, and then the read or write procedure is performed.

The operation instruction instructs the reader to perform an access operation on an electronic tag that satisfies a specific condition, that is, obtains identification information of the electronic tag that satisfies the specific condition. Optionally, the operation instruction may alternatively indicate the reader to perform a read operation on an electronic tag that satisfies a condition, for example, obtain data information in a storage area or a user area of the electronic tag by performing the read operation. Optionally, the operation instruction may alternatively indicate the reader to perform a write operation on an electronic tag that satisfies a condition, for example, write some information into a storage area of the electronic tag by performing the write operation.

In an implementation, the operation instruction may include a tag filter, to indicate a range or a condition of the electronic tag for performing the access/read/write operation. For example, the operation instruction may include a specific inventory rule or access rule. The inventory rule indicates specific electronic tags that are identified by an inventory task corresponding to a current operation instruction. For example, the inventory rule may include a type of the electronic tag, and an identification information interval or range of the electronic tag, or may include information such as an inventory time range or spatial location.

For example, a specific operation instruction indicates to identify an electronic tag whose tag identification range is [1, 5] once every hour, and obtain tag information of the electronic tag whose tag identification range is [1, 5].

S202: The reader establishes a connection to the terminal, and obtains tag information of the terminal.

The tag information of the electronic tag may include an identifier ID. For example, a specific tag identifier may be an electronic product code (Electronic Product Code, EPC) and/or a tag identifier (Tag identifier, TID) and/or another tag identifier used to identify the electronic tag.

Optionally, the tag information may further include other information, for example, sensor data of the electronic tag or data in the tag storage area.

S203: The reader sends the tag information of the terminal to the server.

For a terminal configured with the passive electronic tag, tag information of the terminal is generally a tag identifier ID, and the reader may send the obtained identifier ID of the terminal to the server. In some cases, the tag information of the passive electronic tag may also include other information, for example, data stored in a user area, and the reader may send the tag identifier ID and the data to the server.

For a terminal configured with the semi-passive electronic tag, tag information of the terminal is a tag identifier ID, or the tag information is a tag identifier ID and data, and the reader may send the obtained tag information of the terminal to the server.

In an implementation, in step S202 of the foregoing implementation, a specific process in which the reader establishes the connection to the terminal and obtains the tag information of the terminal may be shown in FIG. 3, and includes the following steps.

S301: The reader broadcasts tag request information.

Specifically, the reader may generate the tag request information based on the operation instruction received from the server in the foregoing step S201, and broadcast the tag request information, so that a terminal within coverage of a signal sent by the reader may receive the tag request information broadcast by the reader.

For example, the operation instruction sent by the server to the reader indicates to perform inventory on an electronic tag whose tag identification range is [1, 5], and the reader may generate a tag request message based on the operation instruction, for example, a select command, where the select command carries indication information indicating that a tag identifier ID is [1, 5].

Therefore, a plurality of terminals within coverage of a broadcast signal may receive the select command broadcast by the reader; and after receiving the select command, may determine, based on the indication information carried in the select command, whether tag identifiers IDs of the plurality of terminals match the identification range indicated in the select command. If the tag identifiers IDs match the identification range, the terminal is activated and waits for a subsequent request message of the reader, for example, a query message in step S302. If the tag identifiers IDs do not match the identification range, the terminal may make no response, or the terminal may remain in a sleep state.

S302: The reader broadcasts the query message.

For example, the query message may be a query command, and indicates the tag to start random access.

S303: The terminal generates a random number and a temporary password; and if the random number is 0, sends a response message to the reader.

Correspondingly, the plurality of terminals within the signal coverage may receive the query message. After receiving the query message, the terminal generates one random number within a specific range.

In other words, for the plurality of terminals that receive the query message within the signal range of the reader, a terminal whose random number is 0 sends the response message to the reader.

The response message may include the temporary password. For example, the temporary password may be a 16-bit random number (random number, RN16), which is used by the terminal to subsequently perform identity verification on the reader.

S304: The reader sends an acknowledgment message to the terminal.

Correspondingly, the reader receives the response message from the terminal, and obtains the temporary password in the response message.

Then, the reader sends an acknowledgment message to the terminal based on the response message, and includes the temporary password in the response message in the acknowledgment message. For example, the acknowledgment message sent by the reader to the terminal is an ACK message, and the ACK message may carry the temporary password RN16 in the response message.

S305: The terminal performs verification based on the acknowledgment message; and if the verification succeeds, sends a message to the reader, where the message carries identification information of the terminal.

Correspondingly, the terminal receives the acknowledgment message from the reader, and performs verification based on the temporary password in the acknowledgment message and the temporary password generated by the terminal in the foregoing step S303. Specifically, the terminal determines whether the temporary password carried in the received acknowledgment message is generated by the terminal. If the temporary password carried in the received acknowledgment message is generated by the terminal, it is considered that the verification succeeds; or if the temporary password carried in the received acknowledgment message is not generated by the terminal, it is considered that the verification fails.

For example, if the terminal verifies that the temporary password RN16 is consistent with the locally stored temporary password, the terminal sends the message to the reader, where the message includes the identification information of the terminal, for example, an EPC code. Optionally, after sending the message, the terminal enters a temporary sleep state.

Optionally, after receiving the message from the terminal, the terminal reader may feed back a response message to the terminal, to notify the terminal that the message is already successfully received. Optionally, after successfully receiving the response message, the terminal enters a temporary sleep state.

Optionally, after step S302, the reader continues to send a QueryRep command, for example, send one QueryRep command at an interval of a specific periodicity.

In a possible implementation, in step S303, if an initial random number generated by the terminal is not 0, after receiving the QueryRep command, the terminal may subtract 1 from the generated random number. Optionally, each time the terminal receives the QueryRep command, the terminal may subtract 1 from the random number until the random number of the terminal is 0. In this case, the terminal may perform the foregoing steps S303 to S305, to complete establishment of the connection between the reader and the terminal, and implement the inventory operation performed by the reader on the terminal.

In a possible implementation, in an inventory procedure, if more than two terminals generate a same random number, a conflict may occur when corresponding terminals report the temporary password RN16, and the reader may re-inventory conflicting tags by resending a query command or another instruction. This is not limited in this application.

For the reader, the reader interacts with the plurality of terminals in sequence to perform the foregoing access process, until the plurality of terminals that satisfy an inventory requirement of the reader complete access.

Currently, with expansion of an internet of things, a 3rd generation partnership project (3rd Generation Partnership Project, 3GPP) network needs to support an IoT terminal, so that the IoT terminal can access the 3GPP network, to implement more complex service interaction.

In an implementation, in an implementation scenario in which the IoT terminal accesses the 3GPP network, an access network device may be configured to perform a function of the foregoing reader, in other words, the access network device may be used as the reader to establish the connection to the terminal, and obtain the tag information of the terminal. For example, the access network device may be a radio access network (Radio Access Network, RAN), is a radio access network element that provides a radio access function for the terminal, and may include at least one of a gNB, a gNB-CU, a gNB-CU-CP, gNB-CU-UP, a gNB-DU, and the like.

Further, the access network device may send the tag information of the terminal to a network element of a core network, for example, a 5G core network (fifth generation Core Network, 5GC), and then the 5GC forwards the tag information to the server, to implement access of the terminal to the core network.

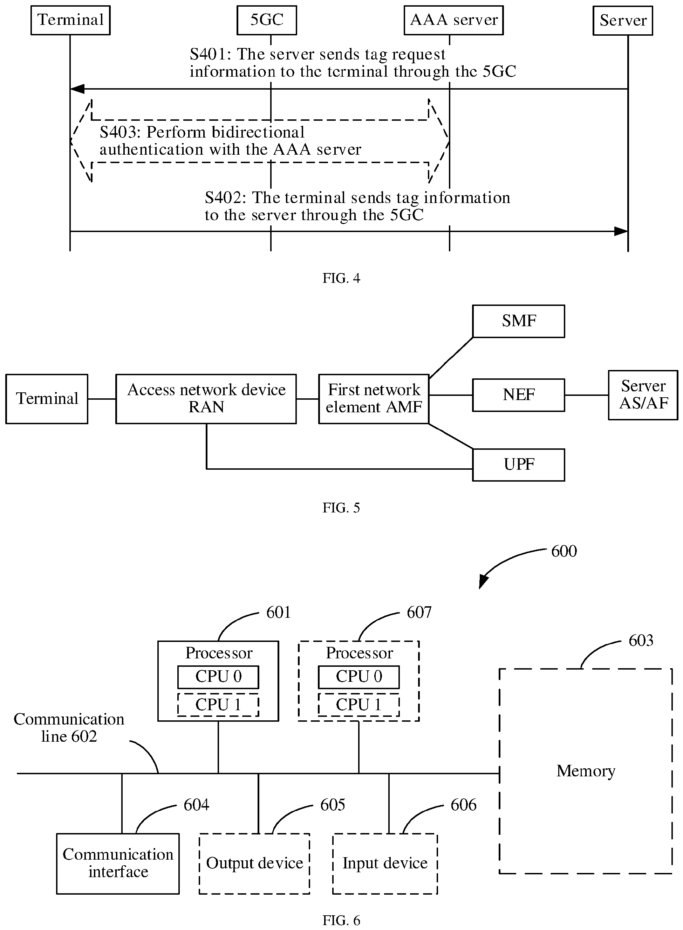

In an implementation, FIG. 4 is a diagram of a network access procedure in which a terminal accesses a core network. The procedure includes the following steps.

S401: A server sends tag request information to a terminal through a 5GC.

The server may be an AS or an AF. The 5GC is a network element of a 5G core network, and may be specifically an access and mobility management function (Access and Mobility Management Function, AMF), another network element configured to implement tag management, or the like.

Specifically, S401 may include: The server sends the tag request information to the 5GC; the 5GC forwards the tag request information to an access network device or the 5GC identifies the tag request information and sends the tag request information to an access network device by using an additional message; and the access network device establishes a connection to the terminal, and obtains tag information of the terminal.

The tag information includes a tag identifier ID. In addition, the tag information may further include data information, and the data information may be data information in a storage area or data information in a user area. For a terminal with a semi-passive electronic tag, if the terminal is associated with a sensor, the data information may also be sensor data.

S402: The terminal sends the tag information to the server through the 5GC.

Specifically, S402 may include: The access network device sends the obtained tag information to the 5GC, and then the 5GC forwards the tag information to the server.

However, for the semi-passive electronic tag, the tag information generally further includes the sensor data or other data in a storage area of the electronic tag, and the semi-passive electronic tag may be more suitable for an outdoor scenario. Therefore, a requirement for data security is high, and authentication between the terminal and an authentication, authorization, and accounting (Authentication, Authorization, and Accounting, AAA) server needs to be performed. A specific authentication procedure is described in the following, and details are not described herein again.

In an implementation, for the terminal with the semi-passive electronic tag, before step S402, the procedure may further include:

S403: The terminal performs authentication with the AAA server.

After the authentication between the terminal and the AAA server succeeds, step S402 is performed.

For example, specifically, S403 may include: The access network device sends the obtained tag identifier ID and data to the 5GC, and then the 5GC forwards the obtained tag identifier ID and data to the server.

Optionally, in a process in which the terminal sends the tag information to an application server through the 5GC, the identifier ID and/or data may be encrypted for transmission, for example, encrypted at an application layer or encrypted at a network layer for transmission, to verify information transmission security. A receiving end may further perform data integrity verification to verify information transmission reliability.

Currently, in a 3GPP standard, a registration procedure of a terminal includes a series of authentication interaction procedures between a plurality of network elements, to implement authentication between the terminal and a network side. However, generally, there are a large quantity of terminals in an internet of things, a complex access procedure leads to a long access delay of the terminal, and access efficiency of the large quantity of terminals is low. Consequently, requirements of inventory efficiency and an access delay of the internet of things cannot be satisfied.

Based on the foregoing problems, in this application, a tag type of an electronic tag of a terminal is identified, and different types of electronic tags correspond to different access procedures, to satisfy different requirements of different types of electronic tags for aspects of inventory efficiency, information security, or the like. This effectively improves the inventory efficiency.

Then, an implementation environment and an application scenario of embodiments of this application are briefly described.

Embodiments of this application may be applied to a communication system shown in FIG. 5. The communication system includes at least one terminal, an access network device, a first network element, and a server.

With reference to descriptions in FIG. 1, the terminal may be the IoT terminal, or may be represented as an electronic tag or a tag in embodiments of this application.

The access network device may be a (R)AN. The (R)AN may be an AN, or may be a RAN. Specifically, the (R)AN may be a base station in various forms, for example, a macro base station, a micro base station, and a distributed unit-control unit (distributed unit-control unit, DU-CU). In addition, the base station may also be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like. The (R)AN is mainly responsible for radio resource management, service quality management, data compression and encryption, and the like on an air interface side.

The first network element may be an AMF, or another network element that may be configured to implement tag management, for example, a tag management network element (Tag Management Function, TMF). The AMF may be responsible for processing a control plane message, and is responsible for mobility management of a user, including mobility status management, temporary user identity allocation, and user authentication and authorization. For example, the AMF is used for access control, mobility management, registration and deregistration, and network element selection.

The server may be an AS or an AF.

Further, the communication system may include a session management function (Session Management Function, SMF), a user plane function (User Plane Function, UPF), a network exposure function (Network Exposure Function, NEF), and the like.

The SMF is mainly used for session management, session establishment, and UE IP address allocation and management, and is responsible for session establishment, modification, and release, quality of service (quality of service, QoS) control, and the like.

The UPF is mainly responsible for forwarding and receiving user data. The UPF may receive downlink data from a data network (data network, DN), and then transmit the downlink data to UE through the (R)AN. The UPF may further receive uplink data from the UE through the (R)AN, and then forward the uplink data to the DN.

The NEF is mainly used to provide corresponding security assurance to ensure security of an external application to a communication network, and provide functions such as QoS customization capability exposure, mobility status event subscription, AF request distribution, and the like for the external application.

It may be understood that FIG. 5 is merely a diagram, and does not constitute a limitation on an application scenario of the technical solutions provided in this application. A person skilled in the art should understand that, in a specific implementation process, the communication system may include fewer devices or network elements than those shown in FIG. 5, or the communication system may further include another device or another network element, and a quantity of devices or network elements in the communication system may also be determined based on a specific requirement.

It should be noted that the communication system shown in FIG. 5 is merely used as an example, and is not intended to limit the technical solutions of this application. A person skilled in the art should understand that, in a specific implementation process, the communication system may further include another device or network element, and a quantity of network elements may also be determined based on a specific requirement.

Optionally, each network element in FIG. 5 in this embodiment of this application may be a functional module in a device. It may be understood that the foregoing function may be a network element in a hardware device, for example, a communication chip in a mobile phone, a software function running on dedicated hardware, or a virtualized function instantiated on a platform (for example, a cloud platform).

For example, each network element in FIG. 5 may be implemented by using a communication apparatus 600 in FIG. 6. FIG. 6 is a diagram of a hardware structure of a communication apparatus to which an embodiment of this application is applicable. The communication apparatus 600 includes at least one processor 601, a communication line 602, a memory 603, and at least one communication interface 604.

The processor 601 may be a general-purpose central processing unit (central processing unit, CPU), a microprocessor, an application-specific integrated circuit (application-specific integrated circuit, ASIC), or one or more integrated circuits configured to control program execution in the solutions of this application.

The communication line 602 may include a path, such as a bus, for transferring information between the foregoing components.

The communication interface 604 uses any apparatus such as a transceiver, and is configured to communicate with another device or communication network, for example, an Ethernet interface, a RAN interface, or a wireless local area network (wireless local area network, WLAN) interface.

The memory 603 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor through the communication line 602. Alternatively, the memory may be integrated with the processor. The memory provided in embodiments of this application may generally be non-volatile. The memory 603 is configured to store computer-executable instructions for executing the solutions of this application, and the processor 601 controls execution. The processor 601 is configured to execute the computer-executable instructions stored in the memory 603, to implement the methods provided in embodiments of this application.

Optionally, the computer-executable instructions in embodiments of this application may also be referred to as application program code. This is not specifically limited in embodiments of this application.

During specific implementation, in an embodiment, the processor 601 may include one or more CPUs, for example, a CPU 0 and a CPU 1 in FIG. 6.

During specific implementation, in an embodiment, the communication apparatus 600 may include a plurality of processors, for example, the processor 601 and a processor 607 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 600 may further include an output device 605 and an input device 606. The output device 605 communicates with the processor 601, and may display information in a plurality of manners. For example, the output device 605 may be a liquid crystal display (liquid crystal display, LCD), a light emitting diode (light emitting diode, LED) display device, a cathode ray tube (cathode ray tube, CRT) display device, a projector (projector), or the like. The input device 606 communicates with the processor 601, and may receive an input of a user in a plurality of manners. For example, the input device 606 may be a mouse, a keyboard, a touchscreen device, a sensor device, or the like.

The communication apparatus 600 may be a general-purpose device or a dedicated device. During specific implementation, the communication apparatus 600 may be a portable computer, a network server, a palmtop computer (personal digital assistant, PDA), a mobile phone, a tablet computer, a wireless terminal, an embedded device, or a device having a structure similar to that in FIG. 6. A type of the communication apparatus 600 is not limited in embodiments of this application.

The following specifically describes a terminal access method provided in embodiments of this application.

It should be noted that names of messages between network elements, names of parameters in the messages, or the like in the following embodiments of this application are merely examples, and there may be other names during specific implementation. This is not specifically limited in embodiments of this application.

It may be understood that some or all of steps in embodiments of this application are merely examples. Other steps or variations of various steps may be further performed in embodiments of this application. In addition, the steps may be performed in a sequence different from a sequence presented in embodiments of this application, and not all the steps in embodiments of this application need to be performed.

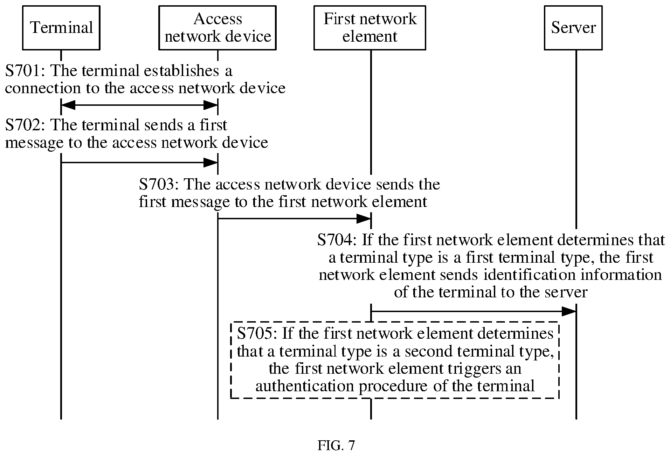

An embodiment of this application provides a terminal access method. As shown in FIG. 7, the method includes the following steps.

S701: A terminal establishes a connection to an access network device.

For a specific procedure of establishing the connection between the terminal and the access network device, refer to the foregoing access procedure between the reader and the terminal in FIG. 3. Details are not described herein again.

After the terminal establishes the connection to the access network device, the terminal may send tag information of an electronic tag of the terminal to the access network device.

S702: The terminal sends a first message to the access network device.

After establishing the connection to the access network device, the terminal generates the first message, where the first message indicates to request to access a core network. For example, the first message may be a registration request message Registration Request.

The first message includes identification information of the electronic tag of the terminal.

Correspondingly, a first network element receives the first message from the access network device.

S703: The access network device sends the first message to the first network element.

The access network device may forward the first message to the first network element, or the access network device may send a processed first message to the first network element.

For example, the access network device may encapsulate a packet header or another packet field based on the first message, to generate a new message, and then the first network element sends the generated new message to the first network element, so that the first network element may obtain the first message by decapsulating the message after receiving the message. In this embodiment of this application, whether the access network device directly forwards the first message or encapsulates the first message in another message for forwarding is not specifically limited.

Correspondingly, the first network element receives the first message of the terminal, and identifies that a terminal type is a first terminal type or a second terminal type, to trigger a subsequent access procedure based on the terminal type. Different terminal types correspond to different subsequent access procedures.

The terminal type may include at least the first terminal type or the second terminal type. In this embodiment of this application, for example, the first terminal type may be an IoT terminal with a passive electronic tag, and the second terminal type may be an IoT terminal with a semi-passive electronic tag.

A specific implementation in which the first network element identifies the terminal type is described in detail below, and details are not described herein again.

In this case, the first network element identifies the terminal type, and determines, based on the terminal type, to continue to perform step S704, or to perform step S705. Optionally, if the first network element fails to identify the terminal type, the first network element may determine, according to a locally preconfigured rule, how to perform a subsequent procedure. For example, if the first network element does not identify the terminal type, the first network element continues to perform step S704 based on the preconfiguration.

S704: If the first network element determines that the terminal type is the first terminal type, the first network element sends identification information of the terminal to a server.

In other words, if the terminal type is the first terminal type, the first network element may send, to the server, the identification information of the terminal obtained from the first message.

For example, the first terminal type may be the IoT terminal with the passive electronic tag. Because a quantity of passive electronic tags is large, a network has a high requirement on inventory efficiency, and has a high requirement on a network access delay (which is equivalent to a low required delay value). Therefore, for the passive electronic tag, a network access procedure may be simplified, an authentication procedure is omitted, and the first network element may directly send the identification information of the terminal to the server.

It should be noted that, in this embodiment of this application, specifically, the first network element may send the identification information of the terminal to the server one by one, in other words, one message carries identification information of one terminal; or may send the identification information of the terminal in parallel, in other words, one message carries identification information of a plurality of terminals. This is not specifically limited in this embodiment of this application.

S705: If the first network element determines that the terminal type is the second terminal type, the first network element triggers an authentication procedure of the terminal.

In other words, if the terminal type is the second terminal type, the first network element may trigger the authentication procedure of the terminal, to perform authentication between the terminal and an AAA server. If the authentication succeeds, tag information of the terminal is transmitted to the server; or if the authentication fails, tag information of the terminal is not transmitted.

For example, the AAA server may be located in the core network, or may be located in the foregoing server (for example, an AF or an AS), or may be used as an independent third-party server. This is not limited herein.

For example, the second terminal type may be the IoT terminal with the semi-passive electronic tag, or the electronic tag carries data that has a high information security requirement, for example, storage area data or sensor data. The information security requirement is high, and requirements on a network access delay and inventory efficiency are low. Therefore, for the semi-passive electronic tag, the authentication procedure may be performed. If the authentication succeeds, tag information of the terminal may be sent to the server.

The authentication procedure of the terminal may specifically include: The AAA server performs authentication on the terminal; the terminal performs authentication on the AAA server; or bidirectional authentication is performed between the AAA server and the terminal. A specific authentication process is described in the following with reference to a corresponding example, and details are not described herein again.

It should be noted that, in this embodiment of this application, the terminal is classified into the first terminal type and the second terminal type to distinguish between network access procedures of different terminal types, and a classification manner may be flexibly configured. For example, the first terminal type is an IoT terminal with a passive electronic tag, and the second terminal type may be an IoT terminal with a semi-passive electronic tag. Alternatively, the first terminal type is an IoT terminal that transmits only a tag identifier ID, and the second terminal type may be an IoT terminal that needs to transmit data other than the tag identifier ID. A terminal type classification manner is not specifically limited in this application.

For example, in an implementation, a terminal type of a same terminal is variable, and a first terminal carries an electronic tag (which is, for example, semi-passive or passive). When a terminal capability permits, when the terminal needs to transmit only a tag identifier ID at a time and there is no security requirement, a terminal type of the first terminal may be indicated as a first terminal type. For example, first indication information may be carried in a first message, where the first indication information indicates that the terminal type is the first terminal type. Alternatively, in another embodiment, a second message sent by the server to the first network element may further carry second indication information, where the second indication information indicates that a type of an accessed target terminal is a first terminal type. When data that needs to be transmitted by the terminal at a time includes sensor data or tag storage area data, and there is a security requirement, the terminal type of the first terminal may be indicated as a second terminal type. A manner of determining the terminal type is described in detail in the following, and details are not described herein again.

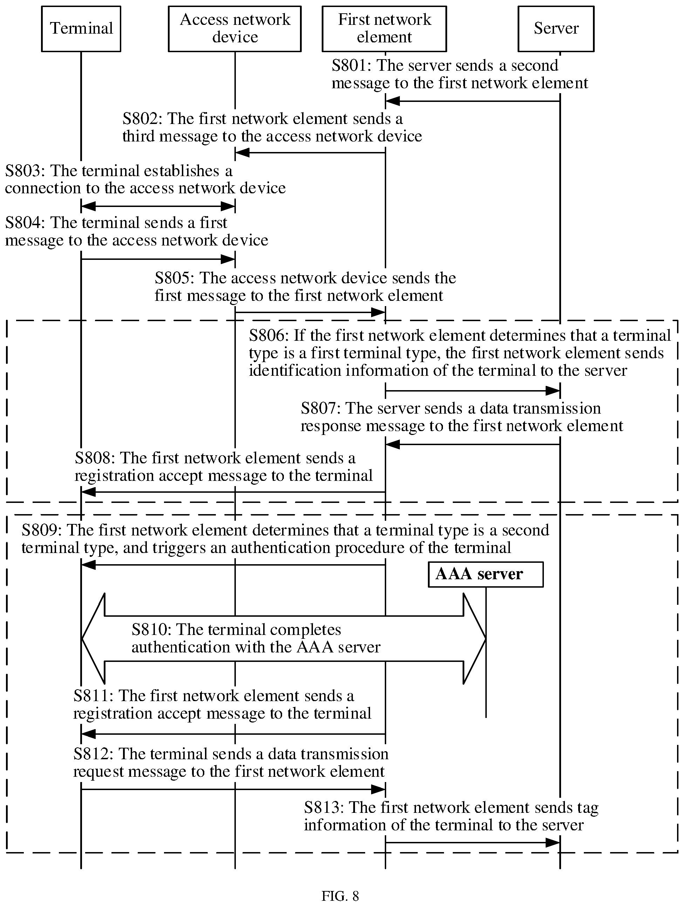

In an implementation, it can be learned from the foregoing inventory procedure that before the reader establishes the connection to the terminal, in other words, before step S701 in this application, a procedure in which the server sends an operation instruction to the reader may be further included, to indicate the reader to perform inventory on a terminal that satisfies a specific condition. As shown in FIG. 8, the method may further include the following steps.

S801: A server sends a second message to a first network element.

The second message indicates to request to perform an access/read/write operation on a terminal. Optionally, the second message may include a tag filter, to indicate a range or a condition of a to-be-inventoried terminal on which the access/read/write operation is performed.

For example, the second message may be specifically a tag inventory request message, or another message indicating the first network element or an access network device to perform tag inventory (access). The performing tag inventory means one or more of obtaining identification information of a tag, or obtaining data information of a tag, or obtaining sensor data information associated with a tag, or performing a write operation on a tag, which is not limited herein.

The second message may include indication information indicating to execute an inventory instruction on an electronic tag of the terminal, for example, an inventory indication; or include indication information indicating to execute a read instruction on an electronic tag of the to-be-inventoried terminal, for example, a read indication; or include indication information indicating to execute a write instruction on an electronic tag of the to-be-inventoried terminal, for example, an access indication. In addition, the second message may further include a filter filter. The filter may include an identifier ID range, a location, or the like of the to-be-inventoried terminal, and indicates to perform an access/read/write operation on a terminal in a specific identifier ID range or a specific location area.

S802: The first network element sends a third message to the access network device.

Correspondingly, the first network element receives the second message from the server, may generate the third message based on the second message, and send, to the access network device, the third message indicating to perform the access/read/write operation on the to-be-inventoried terminal.

The third message may be the same as the second message, in other words, the first network element directly forwards the second message from the server to the access network device. Alternatively, the third message may include or carry the second message. To be specific, after encapsulating the second message, the first network element may forward the second message to the access network device together with other information, so that the access network device may decapsulate the received message to obtain the second message. Alternatively, the third message may be a new message different from the second message, and includes a part of content in the second message, for example, the filter, and/or the indication for performing the access/read/write operation on the tag.

Optionally, the third message may include identification information of the first network element, and indicate, to the access network device, the first network element that sends the third message. Therefore, after the access network device establishes a connection to the terminal, in step S703, the access network device may forward, to the first network element based on the identification information of the first network element, a first message received from the terminal.

For example, if the first network element is an AMF, the identification information of the first network element may be specifically a globally unique AMF identifier (Globally Unique AMF Identifier, GUAMI), indicating a unique identifier ID of the AMF.

S803: The terminal establishes a connection to the access network device.

Refer to the foregoing step S701.

S804: The terminal sends the first message to the access network device.

Refer to the foregoing step S702.

S805: The access network device sends the first message to the first network element.

Refer to the foregoing step S703.

S806: If the first network element determines that a terminal type is a first terminal type, the first network element sends identification information of the terminal to the server.

Refer to the foregoing step S704.

In an implementation, if the first network element determines that the terminal type is the first terminal type, after the first network element sends the identification information of the terminal to the server, the method may further include the following step.

S807: The server sends a data transmission response message to the first network element.

Correspondingly, in step S806, the server receives the identification information of the terminal from the first network element. Then, the server may feed back the data transmission response message to the first network element, to indicate that the server successfully receives the identification information of the terminal.

For example, the server may send the data transmission response message Data Transmission Response to the AMF via a NEF, where the data transmission response message may carry a tag identifier ID of the terminal, to indicate that tag information of the terminal corresponding to the tag identifier ID has been successfully received.

Optionally, the method may further include the following step.

S808: The first network element sends a registration accept message to the terminal.

Correspondingly, after receiving the data transmission response message from the server, the first network element may send, based on the tag identifier ID, an accept message Registration Accept to the terminal corresponding to the tag identifier ID, to indicate that the terminal successfully completes a registration procedure.

In an implementation, after determining that the terminal type is the first terminal type, the first network element may further send the registration accept message to the terminal, to indicate that the terminal successfully completes the registration procedure. Then, the first network element sends identification information of the terminal of the first terminal type to the server.

It should be noted that the several optional implementations of the foregoing examples may be flexibly combined based on the implementation shown in FIG. 7, and are not limited to a same implementation scenario. For example, a specific implementation may include steps S801 to S806, or may include steps S801 to S808, or may include steps S803 to S806. Details are not described below.

In an implementation, after receiving the first message sent by the access network device, the first network element determines that the terminal type is a second terminal type. The method specifically includes the following steps.

S809: The first network element determines that the terminal type is the second terminal type, and triggers an authentication procedure of the terminal.

S810: The terminal completes authentication with an AAA server.

That the terminal completes authentication with the AAA server may specifically mean that any one of the following authentication procedures is performed and the authentication succeeds: The AAA server performs authentication on the terminal; the terminal performs authentication on the AAA server, or bidirectional authentication is performed between the AAA server and the terminal.

S811: The first network element sends a registration accept message to the terminal.

After the authentication between the terminal and the AAA server succeeds, the first network element may send a registration accept message Registration Accept to the terminal, to indicate that the terminal successfully completes the registration procedure.

S812: The terminal sends a data transmission request message to the first network element.

Correspondingly, after receiving the registration accept message Registration Accept from the first network element, the terminal may send the data transmission request message Data Transmission Request to the first network element, where the data transmission request message may carry tag information of the terminal, for example, include a tag identifier ID and data. Optionally, the terminal may encrypt and transmit the tag information.

S813: The first network element sends the tag information of the terminal to the server.

Correspondingly, after receiving the data transmission request message Data Transmission Request from the terminal, the first network element transmits the obtained tag information of the terminal to the server.

In an implementation, if the first network element simultaneously performs an access procedure on a plurality of terminals according to the implementations described in this application, and transmits tag information of the terminals to the server, and the first network element distinguishes between scheduling priorities, the first network element may determine, based on a terminal type, a priority of transmitting the tag information by the first network element to the terminal, in other words, allocate a corresponding scheduling priority based on the terminal type. In other words, different types of terminals correspond to different data transmission priorities.

Optionally, it may be predefined that a transmission priority of the first terminal type is higher than a transmission priority of the second terminal type. In other words, the first network element may allocate a higher scheduling priority to a terminal of the first terminal type, and allocate a lower scheduling priority to a terminal of the second terminal type. Therefore, the first network element may preferentially transmit tag information corresponding to the terminal of the first terminal type, and may send tag information corresponding to the terminal of the second terminal type to the server after sending the tag information corresponding to the terminal of the first terminal type to the server.

For example, the first terminal type is an IoT terminal with a passive electronic tag, and the second terminal type is an IoT terminal with a semi-passive electronic tag. Generally, there are a large quantity of passive electronic tags, and a network has high requirements on inventory efficiency and a delay of sending to the server. Therefore, the first network element may allocate a higher scheduling priority to the IoT terminal with the passive electronic tag, and preferentially send a tag identifier ID of the passive electronic tag to the server.

For example, the first network element may be an AMF, the server may be an AS or an AF, and the AMF may send the tag information of the terminal to the AS/AF via a NEF. In other words, in the foregoing implementation, that the first network element sends the tag information (the identifier ID and/or the data) of the terminal to the server may specifically include: The AMF sends the tag information of the terminal to the NEF, and then the NEF forwards the received tag information of the terminal to the AS/AF.

In the foregoing implementation, the first network element may perform differentiated network access procedures for different types of terminals by identifying the terminal type, to effectively improve inventory efficiency and inventory accuracy of the electronic tag while satisfying differentiated requirements of an internet of things for the different types of terminals.

The following describes in detail several specific implementations in which the first network element determines the terminal type.

In an implementation, the first network element may identify the terminal type based on the first message, where the identification information of the terminal may indicate the terminal type; or the first message indicates the terminal type; or the first message includes first indication information, and the first indication information indicates the terminal type.

Manner 1: The first message carries the first indication information indicating the terminal type.

The first message carries the first indication information, and the first indication information indicates the terminal type, so that the first network may determine, by using the first indication information carried in the first message, whether the terminal type is the first terminal type or the second terminal type.

For example, it is predefined that a specific indicator bit in the first message indicates the first indication information. When the indicator bit is 0, it indicates the first terminal type. When the indicator bit is 1, it indicates the second terminal type.

Manner 2: The identification information of the terminal may indicate the terminal type, so that the first network may determine the terminal type based on the identification information carried in the first message.

For example, it is predefined that several bits included in the identifier ID of the electronic tag of the terminal indicate the terminal type. For example, a value of the bits is xxx, it indicates that the terminal is of the first terminal type. A value of the bits is yyy, it indicates that the terminal is of the second terminal type.

Alternatively, the terminal type may be further determined by using the identification information of the terminal and a predefined terminal type matching rule, where the terminal type matching rule indicates a correspondence between the identification information of the terminal and the terminal type. Specifically, the first network element may determine, based on the identification information of the terminal according to the terminal type matching rule, that the terminal is of the first terminal type or the terminal is of the second terminal type.

The terminal type matching rule may be preconfigured by the first network element, or may be dynamically configured by the server for the first network element before a terminal inventory procedure, or the first network element obtains the terminal type matching rule from the server. For example, the first network element is an AMF, and the terminal type matching rule may be pre-stored in the AMF in a manner of writing the terminal type matching rule locally offline to the AMF or configuring the terminal type matching rule by a network management system. Alternatively, before the inventory procedure, the server may send the terminal type matching rule to the AMF via the NEF.

Manner 3: The first message indicates the terminal type, in other words, different types of first messages indicate different terminal types. For example, if the first message is a registration request message Registration Request, it indicates that the terminal is of the first terminal type. If the first message is of another message type, it indicates that the terminal is of the second terminal type.

Manner 4: The server indicates a specific terminal type for inventory to the first network element, so that the first network element may determine, in a specific periodicity, that a type of a to-be-inventoried terminal is a target terminal type, to perform a subsequent procedure. In this manner, the first network element may determine the terminal type based on an instruction delivered by the server, and does not need to identify the terminal type based on the first message.

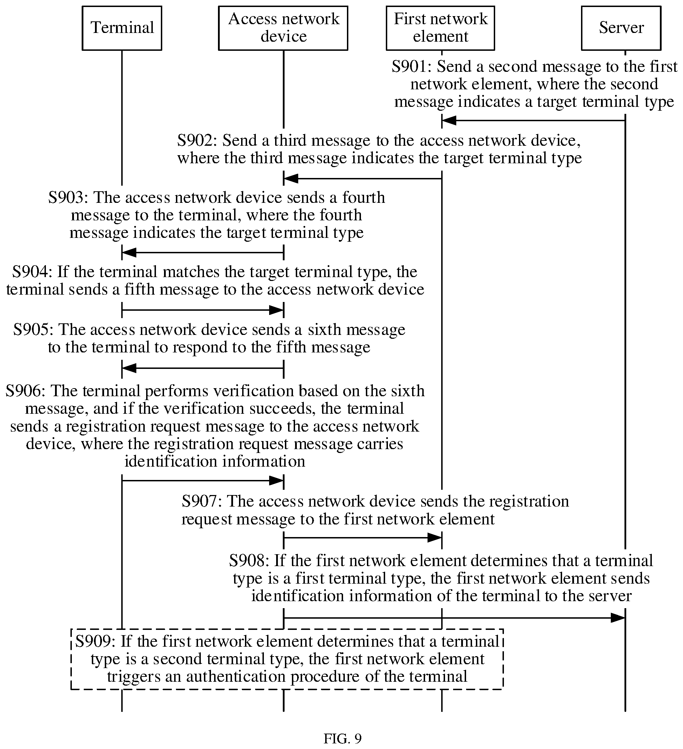

As shown in FIG. 9, the method includes the following steps.

S901: A server sends a second message to a first network element, where the second message indicates a target terminal type.

The second message indicates that a current server requests to perform a read/write operation on a plurality of terminals corresponding to the target terminal type.

The target terminal type may be a first terminal type or a second terminal type. For example, the target terminal type may be an IoT terminal with a passive electronic tag or an IoT terminal with a semi-passive electronic tag.

In an implementation, the second message may include second indication information, and the second indication information indicates the target terminal type. Alternatively, the second message indicates the target terminal type. For example, different instruction types of second messages indicate different target terminal types.

For example, the second message may be specifically a tag inventory request message, where the tag inventory request message indicates to request to perform an access/read/write operation on the terminal, and may further include a tag filter filter. The tag inventory request message includes second indication information indicating the target terminal type, or the tag filter filter carries second indication information indicating the target terminal type. For example, the tag filter filter may include an indication indicating that the target terminal type is an IoT terminal with a passive electronic tag, so that the first network element determines that a current to-be-inventoried IoT terminal is the IoT terminal with the passive electronic tag.

S902: The first network element sends a third message to an access network device, where the third message indicates the target terminal type.

Correspondingly, the first network element receives the second message from the server, may generate the third message based on the second message, and send, to the access network device, the third message indicating to perform a read/write operation on a to-be-inventoried terminal. The third message indicates, to the access network device, a to-be-inventoried target terminal type.

In an implementation, the third message includes third indication information, and the third indication information indicates the target terminal type. Alternatively, the third message indicates the target terminal type. For example, different instruction types of third messages indicate different target terminal types.

The third message may be the same as the second message, or the third message carries the second message, or the third message includes the indication information, and/or the filter, and/or the operation indication information in the second message. For example, the third message may be specifically a tag inventory request message, where the tag inventory request message indicates to request to perform a read/write operation on the terminal, and may further include a tag filter filter. The tag inventory request message includes a specific indication indicating the target terminal type, or the tag filter filter carries a specific indication indicating the target terminal type.

Correspondingly, the access network device receives the third message from the first network element, and determines, based on the third message, that a type of a current to-be-inventoried terminal is the target terminal type. Therefore, with reference to the interaction procedure shown in FIG. 3, the access network device may establish, by broadcasting an inventory instruction, a connection to at least one terminal that satisfies an inventory condition.

In an implementation, a process in which the access network device establishes the connection to the terminal may include the following steps.

S903: The access network device sends a fourth message to the terminal, where the fourth message indicates the target terminal type.

The access network device sends the fourth message to the terminal based on the third message, where the fourth message indicates that the access network device currently requests to inventory the terminal, and the type of the to-be-inventoried terminal that requests to inventory is the target terminal type.

In this case, the access network device inventories only one type of terminal of the target terminal type within preset time, so that a terminal that matches the target terminal type can establish a connection to the access network device, and a terminal that does not match the target terminal type cannot establish a connection to the access network device.

For example, the fourth message may be a tag request message, for example, may be the tag request message or the select command described in step S301. The tag request message or the select command may carry a specific indicator bit indicating the to-be-inventoried target terminal type. For example, when a value of fourth indication information is 0, it indicates that the target terminal type is the first terminal type. When a value of fourth indication information is 1, it indicates that the target terminal type is the second terminal type.

S904: If the terminal matches the target terminal type, the terminal sends a fifth message to the access network device.

Correspondingly, the terminal receives the fourth message from the access network device, and determines, based on the fourth message, whether the terminal matches the indicated target terminal type, in other words, the terminal determines whether a terminal type is consistent with the to-be-inventoried target terminal type. If the terminal type is consistent with the target terminal type, the terminal sends the fifth message to the access network device. If the terminal type is inconsistent with the target terminal type, the terminal does not send the fifth message.

The fifth message may indicate the terminal to accept the inventory instruction of the access network device. For example, with reference to step S303 in the foregoing process in which the reader establishes the connection to the terminal, the fifth message sent by the terminal to the access network device is equivalent to the response message sent by the terminal to the reader in step S303. Similarly, the fifth message may also include a temporary password. For example, the temporary password may be RN16, which is used by the terminal to subsequently perform identity verification on the access network device.

S905: The access network device sends a sixth message to the terminal to respond to the fifth message.

Correspondingly, after receiving the fifth message from the terminal, the access network device feeds back the sixth message to the terminal based on the fifth message.

For example, the sixth message is equivalent to the acknowledgment message sent by the reader to the terminal in step S304 in the foregoing embodiment, in other words, the access network device receives the fifth message from the terminal, and obtains the temporary password in the fifth message.

Then, the access network device sends a sixth message to the terminal based on the fifth message, and includes the temporary password in the fifth message in the sixth message. For example, the sixth message sent by the access network device to the terminal is an ACK response message, and the ACK response message may carry the temporary password RN16 in the fifth message.

S906: The terminal performs verification based on the sixth message, and if the verification succeeds, the terminal sends a registration request message to the access network device, where the registration request message carries identification information.

For example, in the authentication manner described in FIG. 3, the terminal may perform verification based on the temporary password in the sixth message and the temporary password generated by the terminal in step S904. Specifically, the terminal determines whether the temporary password carried in the sixth message is generated by the terminal. If the temporary password carried in the sixth message is generated by the terminal, it is considered that the verification succeeds; or if the temporary password carried in the sixth message is not generated by the terminal, it is considered that the verification fails.

After the terminal successfully establishes the connection to the access network device, the terminal sends the registration request message to the access network device, which is equivalent to that the terminal sends the first message to the access network device in the foregoing embodiment, to indicate to request to access a core network. The registration request message includes identification information of an electronic tag of the terminal.

S907: The access network device sends the registration request message to the first network element.

The access network device may forward the registration request message of the terminal to the first network element. In another implementation, the access network device may further encapsulate indication information of a target tag type into the registration request message, and send a generated message to the first network element, so that the first network element may decapsulate the received message to learn that the access network device currently inventories a terminal of the target tag type.

S908: If the first network element determines that a terminal type is a first terminal type, the first network element sends identification information of the terminal to the server.

For a detailed process, refer to related descriptions of step S704 in the foregoing embodiment.

S909: If the first network element determines that a terminal type is a second terminal type, the first network element triggers an authentication procedure of the terminal.

For a detailed process, refer to related descriptions of step S705 in the foregoing embodiment.

In the foregoing implementation, when delivering an inventory task to the access network device, the server indicates the to-be-inventoried target terminal type, so that the access network device establishes a connection to the terminal that matches the target terminal type, and performs subsequent different access procedures based on the current inventoried terminal type. In this way, registration and access procedures of the terminal are simplified, and inventoried efficiency and accuracy are effectively improved.

The following describes the following three possible authentication procedures of the second terminal type with reference to a specific example. An AAA server may be located in the core network and used as an authentication and authorization function network element of the core network; or may be located in the foregoing server (for example, an AF or an AS); or may be used as an independent third-party server. This is not limited in this application.

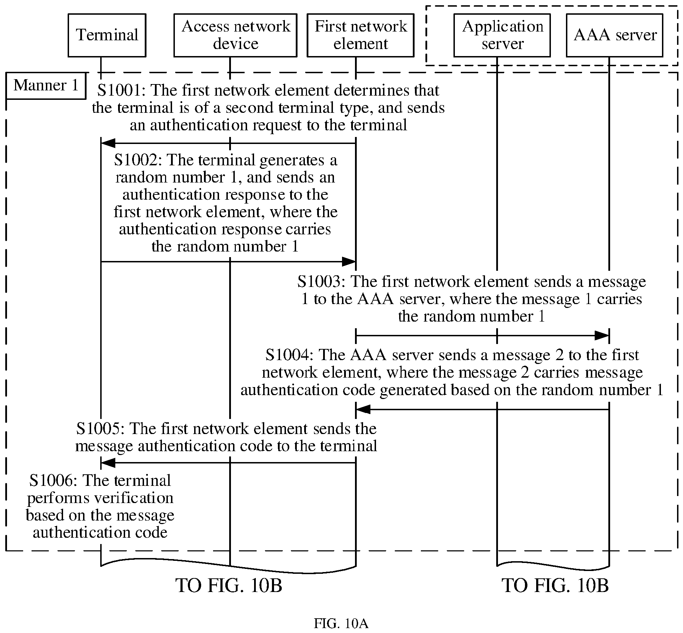

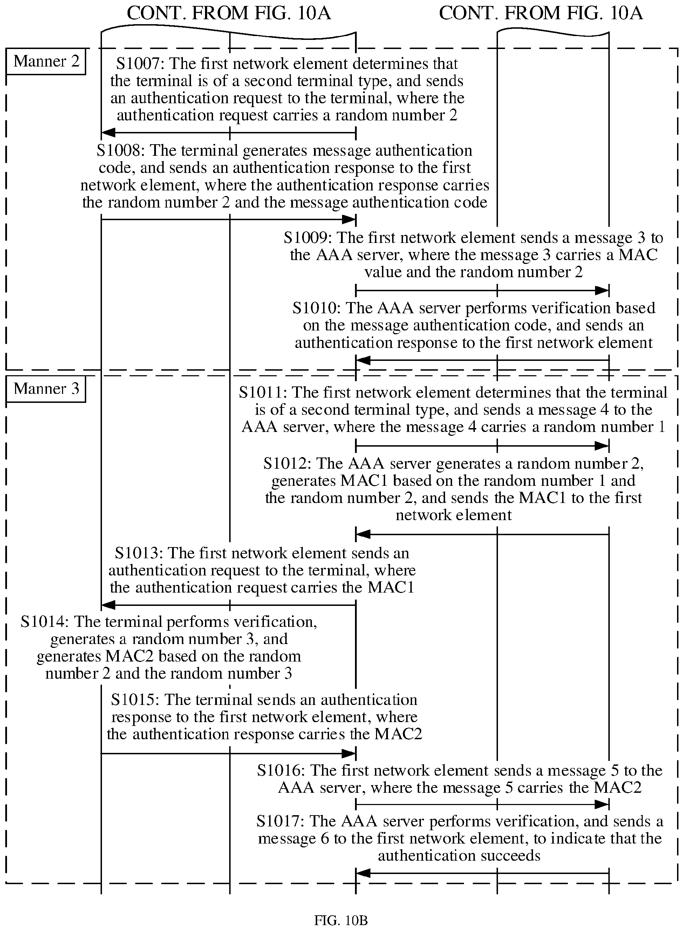

In an implementation, the first network element triggers the authentication procedure of the terminal in step S705. Specifically, as shown in FIG. 10A and FIG. 10B, for a specific implementation process in which the first network element triggers the authentication procedure of the terminal, refer to the following steps.

Manner 1: A terminal performs authentication on an AAA server.

S1001: A first network element sends an authentication request to the terminal.

The authentication request indicates the terminal to perform security authentication on the AAA server.

S1002: The terminal generates a random number 1, and sends an authentication response to the first network element, where the authentication response carries the random number 1.

The authentication response is used to feed back, to the first network element, that the terminal receives the authentication request triggered by the first network element.

The authentication response may carry the random number 1 generated by the terminal, and the random number 1 is used by the terminal to perform security verification on the AAA server.

Optionally, to reduce signaling overheads, step S1001 and step S1002 may not be performed, but the random number 1 generated by the terminal is carried in a process in which the terminal requests access to the first network element, in other words, a registration request message sent by the terminal to the first network element carries the random number 1 generated by the terminal, so that the terminal performs security verification on the AAA server.

S1003: The first network element sends a message 1 to the AAA server, where the message 1 carries the random number 1.

The first network element feeds back the random number 1 of the terminal to the AAA server. The AAA server may be deployed together with an application server, or deployed separately and independently.

The message 1 may further carry a tag identifier ID of the terminal, and is used to feed back tag information.

In an implementation, the first network element may feed back the random number 1 of the terminal to the AAA server through transferring by a NEF network element. Optionally, the first network element may send the random number 1 to the AAA server through transferring by the application server.

S1004: The AAA server sends a message 2 to the first network element, where the message 2 carries message authentication code generated based on the random number 1.

Optionally, the AAA server may generate a message authentication code (Message authentication code, MAC) value based on a specific algorithm (for example, the AAA server and the terminal preconfigure a same security verification algorithm and a same security key), the random number 1, and the preconfigured security key, and feed back the MAC value to the first network element.

Optionally, the message 2 may be specifically a response message corresponding to the message 1. If the message 1 is used to feed back the tag information, the message 2 indicates that the tag information is successfully received.

S1005: The first network element sends the message authentication code to the terminal.

Optionally, the first network element may include the message authentication code in a registration accept message (Registration Accept), and send the registration accept message to the terminal, to indicate that the terminal successfully completes a registration procedure.

S1006: The terminal performs verification based on the message authentication code.

Specifically, the terminal decrypts the received message authentication code based on the preconfigured algorithm and security key, to obtain a random number corresponding to the message authentication code. Then, the terminal verifies whether the random number is the same as the random number 1 originally generated by the terminal, to complete authentication on the AAA server.

For example, the terminal generates and stores the random number 1 in the foregoing step S1002, and the terminal obtains a random number B based on the MAC value forwarded by the first network element. If it is determined that the random number 1 is consistent with the random number B, authentication succeeds; or if the random number 1 is inconsistent with the random number B, authentication fails.

Optionally, after the authentication succeeds, the terminal may notify the first network element that the authentication succeeds.

Manner 2: An AAA server performs authentication on a terminal.

S1007: A first network element sends an authentication request to the terminal, where the authentication request carries a random number 2.

The authentication request indicates to perform security authentication. The random number 2 may be from an inventory request of the AAA server, or the first network element may request the AAA server to obtain the random number for performing security authentication.

S1008: The terminal generates message authentication code, and sends an authentication response to the first network element, where the authentication response carries the random number 2 and the message authentication code.

Optionally, the terminal may generate a MAC value based on a specific algorithm (for example, the terminal and the AAA server preconfigure a same security verification algorithm), the random number 2, and a tag key of the terminal, and feed back the MAC value and the random number 2 to the first network element.

S1009: The first network element sends a message 3 to the AAA server, where the message 3 carries the MAC value and the random number 2.

The message 3 may further carry a tag identifier ID of the terminal, and is used to feed back tag information.

In an implementation, the first network element may feed back the MAC value and the random number 2 of the terminal to the AAA server through transferring by a NEF network element. Optionally, the first network element may send the MAC value and the random number 2 to the AAA server through transferring by an application server.

S1010: The AAA server performs verification based on the message authentication code, and sends an authentication response to the first network element.

Specifically, the AAA server decrypts the received message authentication code based on the preconfigured algorithm, to obtain a random number corresponding to the message authentication code. Then, the AAA server verifies whether the random number is the same as the original random number 2, to complete security authentication on the terminal.

If the authentication performed by the AAA server on the terminal succeeds, the authentication response indicates that the AAA server notifies the first network element that the authentication on the terminal succeeds.

Optionally, the message 3 carries the tag identifier ID of the terminal, and is used to feed back the tag information. The authentication response may further indicate that the tag information is successfully received.

In an implementation, the method may further include: The first network element sends a registration accept message to the terminal, to indicate that the terminal successfully completes a registration procedure.

Manner 3: Bidirectional authentication is performed between an AAA server and a terminal.

S1011: A first network element sends a message 4 to the AAA server, where the message 4 carries a random number 1.

The random number 1 is a random number that is corresponding to the terminal and that is used for security verification. A manner in which the first network element obtains the random number 1 of the terminal may be based on the foregoing step S1001 and step S1002, or the random number 1 generated by the terminal may be carried in a process in which the terminal requests access to the first network element, in other words, a registration request message sent by the terminal to the first network element carries the random number 1 generated by the terminal, so that the terminal performs security verification on the AAA server.

The message 4 may further carry a tag identifier ID of the terminal, and is used to feed back tag information of the terminal to the AAA server.

S1012: The AAA server generates a random number 2, generates MAC1 based on the random number 1 and the random number 2, and sends the MAC1 to the first network element.

Specifically, the AAA server generates the random number 2, may generate the message authentication code MAC1 based on the random number 1, the random number 2, a tag key, and a preconfigured algorithm, and feeds back the message authentication code MAC1 to the first network element.

S1013: The first network element sends an authentication request to the terminal, where the authentication request carries the MAC1.

S1014: The terminal performs verification, generates a random number 3, and generates MAC2 based on the random number 2 and the random number 3.

For example, the terminal decrypts the message authentication code MAC1 carried in the received authentication request, obtains a random number A and a random number B corresponding to the MAC1, and verifies whether the random number A (or B) is the same as the random number 1 originally generated by the terminal. If the random number A (or B) is the same as the random number 1, the terminal generates the random number 3, generates the message authentication code MAC2 based on the random number 2, the random number 3, the preconfigured algorithm, and the tag key, and sends the message authentication code MAC2 to the AAA server through the first network element, so that an AAA server side performs verification. If the verification fails, subsequent steps are not performed, and an authentication failure response message may be sent to the first network element.

S1015: The terminal sends an authentication response to the first network element, where the authentication response carries the MAC2.

S1016: The first network element sends a message 5 to the AAA server, where the message 5 carries the MAC2.

The message 5 may further carry the tag identifier ID of the terminal, and is used to feed back tag information of the terminal to the AAA server.

S1017: The AAA server performs verification, and sends a message 6 to the first network element, to indicate that the authentication succeeds.

Specifically, the AAA server performs decryption based on the received MAC2 and the tag key, obtains a random number C and a random number D corresponding to the MAC2, and verifies whether the random number C (or D) is the same as the random number 2 originally generated by the AAA server. If the random number C (or D) is the same as the random number 2, it is considered that the verification succeeds. In this case, the bidirectional authentication between the AAA server and the terminal succeeds, and the AAA server may notify the first network element that the authentication succeeds.

Optionally, after the terminal and the AAA server complete an authentication procedure, the first network element may send a registration accept message to the terminal, to indicate that the terminal successfully completes the registration procedure.

In the foregoing implementation, the first network element may trigger a second-type terminal to complete security authentication with the AAA server, so that the terminal may subsequently transmit data in an encrypted manner, to ensure data security and improve communication reliability.

It should be noted that the steps shown in embodiments of this application are merely used as a summary or an example. In a specific implementation process, an interaction procedure between network elements may include other steps that are not shown in this specification. For a complete procedure, refer to descriptions of related technologies. This is not specifically limited in embodiments of this application.

The foregoing mainly describes the solutions provided in embodiments of this application from a perspective of interaction between network elements. It may be understood that, to implement the foregoing functions, the foregoing network elements/communication apparatuses include corresponding hardware structures and/or software modules for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the network element may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

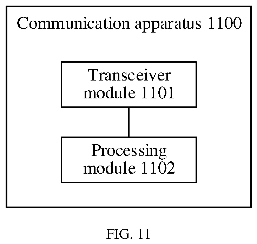

For example, when the functional modules are obtained through division in an integrated manner, this application provides a communication apparatus, configured to implement the steps performed by the network elements in FIG. 7 to FIG. 10B in the foregoing embodiments. As shown in FIG. 11, a communication apparatus 1100 may include a transceiver module 1101 and a processing module 1102. The transceiver module 1101 is configured to implement a transceiver function, for example, may be specifically a transceiver circuit, a transceiver machine, a transceiver, or a communication interface.

Based on the foregoing embodiment, this application provides a communication apparatus, configured to perform the steps performed by the first network element in the foregoing implementations. As shown in FIG. 11, a communication apparatus 1100 may include a transceiver module 1101 and a processing module 1102.

The transceiver module 1101 is configured to receive a first message from an access network device, where the first message includes identification information of a terminal.

The processing module 1102 is configured to: identify a terminal type; and if the terminal type is a first terminal type, send the identification information of the terminal to a server; or if the terminal type is a second terminal type, trigger an authentication procedure of the terminal.

In a possible implementation, the processing module 1102 is specifically configured to identify the terminal type based on the first message, where the identification information of the terminal indicates the terminal type; or the first message indicates the terminal type; or the first message includes first indication information, and the first indication information indicates the terminal type.

In a possible implementation, if the identification information of the terminal indicates the terminal type, the processing module 1102 is specifically configured to determine, based on the identification information of the terminal according to a terminal type matching rule, that the terminal type is the first terminal type or the second terminal type, where the terminal type matching rule indicates a correspondence between the identification information of the terminal and the terminal type.

In a possible implementation, the apparatus 1100 is configured with the terminal type matching rule, or obtains the terminal type matching rule from the server.

In a possible implementation, the transceiver module 1101 is further configured to receive a second message from the server, where the second message indicates a target terminal type, where the second message includes second indication information, and the second indication information indicates the target terminal type; or the second message indicates the target terminal type, and the target terminal type includes the first terminal type or the second terminal type.

In a possible implementation, the transceiver module 1101 is further configured to send a third message to the access network device based on the second message, where the third message indicates the target terminal type, where the third message includes third indication information, and the third indication information indicates the target terminal type; or the third message indicates the target terminal type.

In addition, an embodiment of this application further provides a communication apparatus, configured to implement the steps performed by the terminal in FIG. 7 to FIG. 9 in the foregoing embodiments. As shown in FIG. 11, a communication apparatus 1100 may include a transceiver module 1101 and a processing module 1102.

The processing module 1102 is configured to establish a connection to an access network device.

The transceiver module 1101 is configured to send a first message to a first network element through the access network device, where the first message includes identification information of a terminal, and the first message indicates a terminal type.

In a possible implementation, the identification information of the terminal indicates the terminal type; or a type of the first message indicates the terminal type; or the first message includes first indication information, and the first indication information indicates the terminal type.

In a possible implementation, if the terminal type is a second terminal type, the transceiver module 1101 is further configured to receive an authentication request from the first network element. The processing module 1102 is further configured to complete authentication with an authentication, authorization, and accounting server. The transceiver module 1101 is further configured to send an authentication response to the first network element.

In a possible implementation, the transceiver module 1101 is specifically configured to: receive a fourth message from the access network device, where the fourth message indicates a target terminal type, and the target terminal type includes a first terminal type or the second terminal type; if the terminal matches the target terminal type, send a fifth message to the access network device, where the fifth message is used to request to access the access network device; and receive a sixth message from the access network device, where the sixth message is used to respond to the fifth message.

In addition, an embodiment of this application further provides a communication apparatus, configured to implement the steps performed by the access network device in FIG. 7 to FIG. 9 in the foregoing embodiments. As shown in FIG. 11, a communication apparatus 1100 may include a transceiver module 1101 and a processing module 1102.

The transceiver module 1101 is configured to receive a third message from a first network element, where the third message indicates a target terminal type, and the target terminal type includes a first terminal type or a second terminal type.

The processing module 1102 is configured to establish a connection to a terminal that matches the target terminal type.

The transceiver module 1101 is further configured to forward a first message from the terminal to the first network element, where the first message includes identification information of the terminal.

In a possible implementation, the third message indicates the target terminal type, where the third message includes third indication information, and the third indication information indicates the target terminal type; or the third message indicates the target terminal type.

In a possible implementation, the transceiver module 1101 is specifically configured to: send a fourth message based on the third message, where the fourth message indicates the target terminal type; receive a fifth message from the terminal, where the fifth message is used to request to access the access network device, and a terminal type is the target terminal type; and send a sixth message to the terminal, where the sixth message is used to respond to the fifth message.

In addition, an embodiment of this application further provides a communication apparatus, configured to implement the steps performed by the server in FIG. 7 to FIG. 9 in the foregoing embodiments. As shown in FIG. 11, a communication apparatus 1100 may include a transceiver module 1101.

The transceiver module 1101 is configured to send a second message to a first network element, where the second message indicates a target terminal type; or the second message indicates a terminal type matching rule, the target terminal type includes a first terminal type or a second terminal type, and the terminal type matching rule indicates a correspondence between identification information of a terminal and a terminal type.

The transceiver module 1101 is further configured to receive the identification information from the terminal.

In a possible implementation, the second message includes second indication information, and the second indication information indicates the target terminal type; or the second message indicates the target terminal type.

In a simple embodiment, a person skilled in the art may figure out that the communication apparatus 1100 may be in a form shown in FIG. 6. For example, the processor 601 in FIG. 6 may invoke computer-executable instructions stored in the memory 603, so that the communication apparatus 1100 performs the method performed by each network element/communication apparatus in the foregoing method embodiments.

For example, a function/implementation process of the transceiver module 1101 in FIG. 11 may be implemented by the processor 601 in FIG. 6 by invoking the computer-executable instructions stored in the memory 603. Alternatively, a function/implementation process of the processing module 1102 in FIG. 11 may be implemented by the processor 601 in FIG. 6 by invoking the computer-executable instructions stored in the memory 603. A function/implementation process of the transceiver module 1101 in FIG. 11 may be implemented by the communication interface 604 in FIG. 6.

It should be noted that one or more of the foregoing modules or units may be implemented by using software, hardware, or a combination thereof. When any one of the foregoing modules or units is implemented by the software, the software exists in a form of computer program instructions, and is stored in the memory. The processor may be configured to execute the program instructions and implement the foregoing method procedure. The processor may be built into a SoC (system-on-a-chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may run necessary software or does not depend on software to perform the foregoing method procedures.

Optionally, an embodiment of this application further provides a chip system, including: at least one processor and an interface, where the at least one processor is coupled to a memory through the interface; and when the at least one processor executes a computer program or instructions in the memory, the method according to any one of the foregoing method embodiments is performed. In a possible implementation, the chip system further includes the memory. Optionally, the chip system may include a chip, or may include a chip and another discrete component. This is not specifically limited in embodiments of this application.

Optionally, an embodiment of this application further provides a computer-readable storage medium. All or some of the procedures in the foregoing method embodiments may be implemented by a computer program instructing related hardware. The program may be stored in the computer-readable storage medium. When the program is executed, the procedures of the foregoing method embodiments may be included. The computer-readable storage medium may be an internal storage unit of the communication apparatus according to any one of the foregoing embodiments, for example, a hard disk or memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is configured on the communication apparatus. Further, the computer-readable storage medium may include both the internal storage unit and the external storage device of the communication apparatus. The computer-readable storage medium is configured to store the computer program and store other programs and data that are required by the communication apparatus. The computer-readable storage medium may be further configured to temporarily store data that has been output or is to be output.

Optionally, an embodiment of this application further provides a computer program product. All or some of the procedures in the foregoing method embodiments may be implemented by a computer program instructing related hardware. The program may be stored in the computer program product. When the program is executed, the procedures of the foregoing method embodiments may be included.

Optionally, an embodiment of this application further provides computer instructions. All or some of the procedures in the foregoing method embodiments may be implemented by computer instructions instructing related hardware (such as a computer, a processor, an access network device, a mobility management network element, or a session management network element). The program may be stored in the computer-readable storage medium or the computer program product.

Based on the foregoing descriptions of the implementations, a person skilled in the art may clearly understand that, for a purpose of convenient and brief descriptions, division into the foregoing functional modules is merely used as an example for illustration. During actual application, the foregoing functions can be allocated to different modules for implementation based on a requirement. In other words, an inner structure of an apparatus is divided into different functional modules to implement all or some of the functions described above.

In the several embodiments provided in this application, it should be understood that the disclosed apparatus and method may be implemented in another manner. For example, the described apparatus embodiment is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A terminal access method, applied to a first network element, wherein the method comprises:
receiving a first message from an access network device, wherein the first message comprises identification information of a terminal;
identifying a terminal type; and
if the terminal type is a first terminal type, sending the identification information of the terminal to an application server; or
if the terminal type is a second terminal type, triggering an authentication procedure of the terminal.

2. The method according to claim 1, wherein the identifying a terminal type specifically comprises:
identifying the terminal type based on the first message, wherein
the identification information of the terminal indicates the terminal type; or the first message indicates the terminal type; or the first message comprises first indication information, and the first indication information indicates the terminal type.

3. The method according to claim 2, wherein if the identification information of the terminal indicates the terminal type, the identifying the terminal type based on the first message specifically comprises:
determining, based on the identification information of the terminal according to a terminal type matching rule, that the terminal type is the first terminal type or the second terminal type, wherein the terminal type matching rule indicates a correspondence between the identification information of the terminal and the terminal type.

4. The method according to claim 3, wherein the first network element is configured with the terminal type matching rule, or the first network element obtains the terminal type matching rule from the application server.

5. The method according to claim 1, wherein before the receiving a first message from an access network device, the method further comprises:
receiving a second message from the application server, wherein the second message indicates a target terminal type, wherein the second message comprises second indication information, and the second indication indicates the target terminal type; or the second message indicates the target terminal type, and the target terminal type comprises the first terminal type or the second terminal type.

6. The method according to claim 5, wherein after the receiving a second message from the application server, the method further comprises:
sending a third message to the access network device based on the second message, wherein the third message indicates the target terminal type, wherein the third message comprises third indication information, and the third indication information indicates the target terminal type; or the third message indicates the target terminal type.

7. The method according to any one of claims 1 to 6, wherein the first network element is an access and mobility management function network element, the first terminal type is a passive electronic tag, and the second terminal type is a semi-passive electronic tag.

8. A terminal access method, applied to a terminal, wherein the method comprises:
establishing a connection to an access network device; and
sending a first message to a first network element through the access network device, wherein the first message comprises identification information of the terminal, and the first message indicates a terminal type.

9. The method according to claim 8, wherein that the first message indicates a terminal type specifically comprises:
the identification information of the terminal indicates the terminal type; or a type of the first message indicates the terminal type; or the first message comprises first indication information, and the first indication information indicates the terminal type.

10. The method according to claim 8 or 9, wherein if the terminal type is a second terminal type, the method further comprises:
receiving an authentication request from the first network element;
completing authentication with an authentication, authorization, and accounting server; and
sending an authentication response to the first network element.

11. The method according to any one of claims 8 to 10, wherein the establishing a connection to an access network device specifically comprises:
receiving a fourth message from the access network device, wherein the fourth message indicates a target terminal type, and the target terminal type comprises a first terminal type or the second terminal type;
if the terminal matches the target terminal type, sending a fifth message to the access network device, wherein the fifth message is used to request to access the access network device; and
receiving a sixth message from the access network device, wherein the sixth message is used to respond to the fifth message.

12. A terminal access method, applied to an access network device, wherein the method comprises:
receiving a third message from a first network element, wherein the third message indicates a target terminal type, and the target terminal type comprises a first terminal type or a second terminal type;
establishing a connection to a terminal that matches the target terminal type; and
forwarding a first message from the terminal to the first network element, wherein the first message comprises identification information of the terminal.

13. The method according to claim 12, wherein the third message indicates the target terminal type, wherein the third message comprises third indication information, and the third indication information indicates the target terminal type; or the third message indicates the target terminal type.

14. The method according to claim 12 or 13, wherein the establishing a connection to a terminal that matches the target terminal type specifically comprises:
sending a fourth message based on the third message, wherein the fourth message indicates the target terminal type;
receiving a fifth message from the terminal, wherein the fifth message is used to request to access the access network device, and a terminal type is the target terminal type; and
sending a sixth message to the terminal, wherein the sixth message is used to respond to the fifth message.

15. A communication apparatus, wherein the apparatus comprises:
a transceiver module, configured to receive a first message from an access network device, wherein the first message comprises identification information of a terminal; and
a processing module, configured to: identify a terminal type; and
if the terminal type is a first terminal type, send the identification information of the terminal to an application server; or
if the terminal type is a second terminal type, trigger an authentication procedure of the terminal.

16. The apparatus according to claim 15, wherein the processing module is specifically configured to:
identify the terminal type based on the first message, wherein the identification information of the terminal indicates the terminal type; the first message indicates the terminal type; or the first message comprises first indication information, and the first indication information indicates the terminal type.

17. The apparatus according to claim 16, wherein if the identification information of the terminal indicates the terminal type, the processing module is specifically configured to:
determine, based on the identification information of the terminal according to a terminal type matching rule, that the terminal type is the first terminal type or the second terminal type, wherein the terminal type matching rule indicates a correspondence between the identification information of the terminal and the terminal type.

18. The apparatus according to claim 17, wherein the apparatus is configured with the terminal type matching rule, or obtains the terminal type matching rule from the application server.

19. The apparatus according to claim 17, wherein the transceiver module is further configured to:
receive a second message from the application server, wherein the second message indicates a target terminal type, wherein the second message comprises second indication information, and the **second indication information indicates** the target terminal type; or the second message indicates the target terminal type, and the target terminal type comprises the first terminal type or the second terminal type.

20. The apparatus according to claim 19, wherein the transceiver module is further configured to:
send a third message to the access network device based on the second message, wherein the third message indicates the target terminal type, wherein the third message comprises third indication information, and the third indication information indicates the target terminal type; or the third message indicates the target terminal type.

21. A communication apparatus, wherein the apparatus comprises:
a processing module, configured to establish a connection to an access network device; and
a transceiver module, configured to send a first message to a first network element through the access network device, wherein the first message comprises identification information of the terminal, and the first message indicates a terminal type.

22. The apparatus according to claim 21, wherein the identification information of the terminal indicates the terminal type; or a type of the first message indicates the terminal type; or the first message comprises first indication information, and the first indication information indicates the terminal type.

23. The apparatus according to claim 21 or 22, wherein if the terminal type is a second terminal type, the transceiver module is further configured to receive an authentication request from the first network element;
the processing module is further configured to complete authentication with an authentication, authorization, and accounting server; and
the transceiver module is further configured to send an authentication response to the first network element.

24. The apparatus according to any one of claims 21 to 23, wherein the transceiver module is specifically configured to:
receive a fourth message from the access network device, wherein the fourth message indicates a target terminal type, and the target terminal type comprises a first terminal type or the second terminal type;
if the terminal matches the target terminal type, send a fifth message to the access network device, wherein the fifth message is used to request to access the access network device; and
receive a sixth message from the access network device, wherein the sixth message is used to respond to the fifth message.

25. A communication apparatus, wherein the apparatus comprises:
a transceiver module, configured to receive a third message from a first network element, wherein the third message indicates a target terminal type, and the target terminal type comprises a first terminal type or a second terminal type; and
a processing module, configured to establish a connection to a terminal that matches the target terminal type, wherein
the transceiver module is further configured to forward a first message from the terminal to the first network element, wherein the first message comprises identification information of the terminal.

26. The apparatus according to claim 25, wherein the third message indicates the target terminal type, wherein the third message comprises third indication information, and the third indication information indicates the target terminal type; or the third message indicates the target terminal type.

27. The apparatus according to claim 25 or 26, wherein the transceiver module is specifically configured to:
send a fourth message based on the third message, wherein the fourth message indicates the target terminal type;
receive a fifth message from the terminal, wherein the fifth message is used to request to access the communication apparatus, and a terminal type is the target terminal type; and
send a sixth message to the terminal, wherein the sixth message is used to respond to the fifth message.

28. A communication apparatus, wherein the communication apparatus comprises a processor and a communication interface, wherein
the communication interface is configured to communicate with a module outside the communication apparatus, and the processor is configured to run a computer program or instructions, to implement the method according to any one of claims 1 to 14.

29. A computer-readable storage medium, wherein the computer-readable storage medium comprises a computer program; and when the computer program is run on a computer, the computer is enabled to perform the method according to any one of claims 1 to 14.

30. A communication system, wherein the communication system comprises the communication apparatus according to any one of claims 15 to 20, the communication apparatus according to any one of claims 21 to 24, and the communication apparatus according to any one of claims 25 to 27.
